# EUROPÄISCHE PATENTSCHRIFT

(11) **EP 0 632 399 B1**
(45) Veröffentlichungstag und Bekanntmachung des Hinweises auf die Patenterteilung: **10.02.1999**
(21) Anmeldenummer: 94109991.3
(22) Anmeldetag: 28.06.1994
(51) Int. Cl.: G06K 7/10

(54) **Vorrichtung zur beidseitigen optischen Abtastung von Belegen**
Optical two sided scanning device for documents
Dispositif de balayage optique des deux faces de documents

(30) Priorität: 29.06.1993 DE 4321602
(43) Veröffentlichungstag der Anmeldung: 04.01.1995
(73) Patentinhaber: CGK Computer Gesellschaft Konstanz mbH, D-78467 Konstanz (DE)
(72) Erfinder: Schnitzlein, Markus, Dipl.Phys., D-78315 Radolfzell (DE); Allweier, Arnold, Dipl.-Ing.(FH), D-78476 Allensbach (DE)
(74) Vertreter: Epping, Wilhelm, Dr.-Ing.

(56) Entgegenhaltungen:
- EP-A- 0 444 958
- DE-B- 1 007 077
- DE-B- 2 810 282
- US-A- 4 571 636

## Beschreibung

Die Erfindung betrifft eine Vorrichtung nach den Merkmalen des Oberbegriffs des Anspruches 1.

Bei der optischen Abtastung von Formularen, Belegen oder dergleichen stellt sich wegen der Forderung nach möglichst geringer Baugröße immer wie der die Aufgabe, die Länge des optischen Strahlengangs so gering wie möglich zu halten. Eine Minimierung des Strahlengangs läßt sich bekannterweise durch Spiegel oder ähnliche Grenzflächen erreichen, mit denen der Lichtstrahl durch ein- oder mehrmalige Reflexion auf relativ engstem Raum umgelenkt oder gefaltet werden kann. Die gegenseitige exakte Justierung der einzelnen Spiegel und Grenzflächen kann in einfacher Weise vermieden werden, wenn die Spiegel und Grenzflächen in einer Lichtumlenkeinheit, z.B. in einem gemeinsamen Prismenkörper aus Glas oder Kunststoff integriert werden. So ist beispielsweise aus der deutschen Patentschrift 28 10 282 eine Mikrofilmeinrichtung zur beidseitigen Verfilmung von Belegen bekannt, bei der das Licht einer Lichtquelle über Umlenkspiegel auf zwei Prismenkörper auf der Vorderseite bzw. Rückseite des Beleges gelenkt und das dort reflektierte Licht über die gleichen Prismenkörper auf eine einzige Aufnahmekamera umgelenkt wird. Dem Wunsch nach geringem Raumbedarf wird diese bekannte Anordnung nur zum Teil gerecht, weil die zu beiden Seiten der Belegbahn angeordneten Prismenkörper wie zwei ausgebreitete Flügel quer zur Belegebene abstehen und damit sehr viel Platz beanspruchen.

Der vorliegenden Erfindung liegt deshalb die Aufgabe zugrunde, für Lichtumlenkeinrichtungen zur gleichzeitigen optischen Abtastung von Belegvorderseite und Belegrückseite eine möglichst raumsparende Lösung zu finden.

Die Lösung dieser Aufgabe ergibt sich, ausgehend von einer Vorrichtung der im Oberbegriff des Anspruches angegebenen Art erfindungsgemäß durch die Merkmale kennzeichnenden des Anspruchs 1. Der besondere Vorteil dieser Vorrichtung besteht darin, daß die Lichtumlenkeinheiten im wesentlichen parallel zur Belegebene angeordnet sind und dadurch sehr wenig Platz beanspruchen.

Vorteilhafte Ausgestaltungen der Erfindung ergeben sich durch die Merkmale der Unteransprüche.

Im folgenden wird ein Ausführungsbeispiel der Erfindung anhand der Zeichnung näher erläutert. Dabei zeigen
Figur 1 ein perspektivisch dargestelltes Prinzipbild einer erfindungsgemäßen Vorrichtung zur beidseitigen Abtastung von Belegen,
Figur 2 eine schematische Seitenansicht der Vorrichtung gemäß Figur 1 mit zusätzlichen Umlenkspiegeln für einen neben der Vorrichtung angeordneten Bildwandler.

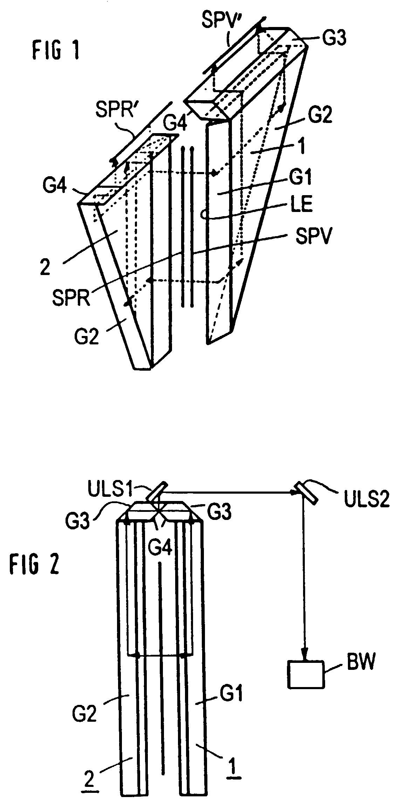

Die Figur 1 zeigt zwei als Prismenkörper ausgebildete Lichtumlenkeinheiten 1,2, die zu beiden Seiten einer Belegtransporteinrichtung für stehend transportierte Belege angeordnet sind. Die beiden identisch angeordneten Prismenkörper sind, bezogen auf eine zwischen den beiden Prismenkörpern in der Ebene des Beleges senkrecht zur Belegtransportrichtung verlaufende Achse, spiegelsymmetrisch zueinander angeordnet. Der dazwischen transportierte Beleg wird durch zwei senkrechte Pfeile SPV und SPR, stellvertretend für jeweils eine Belegspalte an der Vorder- und Rückseite, symbolisiert Vorder- und Rückseite des transportierten Beleges werden mittels getrennter Beleuchtungseinrichtungen oder mittels einer gemeinsamen Beleuchtungseinrichtung und zugehörige Umlenkspiegel spaltenweise belichtet, wobei zur Vermeidung einer wechselseitigen Störung zwischen der beleuchteten Spalte auf der Belegvorderseite und der beleuchteten Spalte auf der Belegrückseite ein zeitlicher Versatz notwendig ist. Das zum Beispiel an der beleuchteten Belegspalte der Belegvorderseite -siehe Pfeil SPV- reflektierte Licht gelangt über eine parallel zur Belegebene verlaufende Lichteintrittsfläche LE eines ersten Dreikantprismas innerhalb des Prismenkörpers an eine erste Grenzfläche G1, die den Lichtstrahl parallel zur Belegebene an eine in einem Winkel von 45° geneigte zweite Grenzfläche eines zweites Prismas umlegt. Anschließend gelangt der umgelenkte Lichtstrahl an ein in Richtung Belegebene weisendes drittes Prisma, das den Querschnitt eines Parallelogramms aufweist und dessen dritte und vierte Grenzflächen G3, G4 derart angeordnet sind, daß der an der vierten Grenzfläche G4 reflektierte und über eine Lichtaustrittsfläche LA zum Bildwandler (nicht dargestellt) gerichtete Lichtstrahl als Abbild (SPV', SPR') der vorderen bzw. hinteren Belegspalte zueinander fluchtend in einer Linie parallel zur Belegebene verläuft. Da die beiden Lichtumlenkeinheiten 1, 2 symmetrisch zueinander angeordnet sind, werden die beiden Belegspalten direkt über der oberen Belegkante abgebildet Ein darüber angeordneter optoelektrischer Bildwandler kann somit gleichzeitig das Abtastsignal je einer Belegspalte der Belegvorderseite und der Belegrückseite empfangen und verarbeiten. Die beiden etwa dreieckförmig ausgebildeten Prismenkörper bestehen vorzugsweise aus Glas oder durchsichtigem Kunststoff. Bei Verwendung eines aus Kunststoff bestehenden Prismenkörpers besteht die Möglichkeit, wenigstens einen Teil der im Strahlengang zwischen Beleuchtungseinrichtung und Bildwandler vorgesehenen Abbildungsoptik im Prismenkörper, z.B. in die Lichteintritts- und Lichtaustrittsflächen zu integrieren.

Anstelle eines aus Glas oder Kunststoff bestehenden Prismenkörpers kann auch eine in analoger Weise aus Spiegelflächen gebildete Lichtumlenkeinheit verwendet werden. Zur exakten räumlichen Zuordnung der Spiegelflächen, die hier die Grenzflächen bilden, empfiehlt sich eine dem Prismenkörper in Form und Größe angepaßte gemeinsame Halterung für sämliche Spiegelflächen.

Im Normalfall wird der die Lichtstrahlen empfangende Bildwandler bei einer Vorrichtung gemäß Figur 1 direkt über den beiden Lichtumlenkeinheiten 1, 2 angeordnet sein. Falls dort kein ausreichender Platz für den Bildwandler zur Verfügung steht, kann in vorteilhafter Weise auch ein Aufbau gewählt werden (siehe Figur 2), bei dem das virtuelle Bild der Belegspalten SPV, SPR über zwei Umlenkspiegel ULS1, ULS 2 auf einen seitlich daneben angeordneten Bildwandler BW umgelenkt wird.

## Patentansprüche

1. Vorrichtung zur beidseitigen optischen Abtastung von Belegen, unter Verwendung wenigstens einer Beleuchtungseinrichtung, zweier jeweils der Vorderseite bzw. Rückseite des Beleges räumlich zugeordneter Lichtumlenkeinheiten, sowie eines optoelektrischen Bildwandlers zur gleichzeitigen spaltenweisen Abtastung von Belegvorder- und Belegrückseite, wobei
die beiden Lichtumlenkeinheiten (1,2), bezogen auf eine in der Ebene des Beleges senkrecht zur Belegtransportrichtung verlaufende Achse, symmetrisch zueinander angeordnet sind und jeweils eine erste Grenzfläche (G1) aufweisen, **dadurch gekennzeichnet**, daß die erste Grenzfläche den von einer vorderen bzw. hinteren Belegspalte (SPV,SPR) reflektierten Lichtstrahl parallel zur Belegebene in Belegtransportrichtung an eine in einem Winkel von 45° zur ersten Grenzfläche geneigte zweite Grenzfläche (G2) umlenkt und daß der an der zweiten Grenzfläche (G2) in Richtung Belegoberkante reflektierte Lichtstrahl mittels einer dritten (G3) und vierten Grenzfläche (G4) so umgelenkt wird, daß die jeweils an der vierten Grenzfläche (G4) reflektierten Lichtstrahlen als Abbild der vorderen bzw. hinteren Belegspalte (SPV',SPR') zueinander fluchtend in einer Linie parallel zur Belegebene auf den Bildwandler treffen.

2. Vorrichtung nach Anspruch 1,
**dadurch gekennzeichnet**, daß die Lichtumlenkeinheit (1,2) aus mehreren, in ihrer Lage zueinander fixierten Spiegelflächen besteht.

3. Vorrichtung nach Anspruch 1,
dadurch gekennzeichnet, daß die Lichtumlenkeinheit (1,2) aus einem einzigen Prismenkörper besteht, dessen senkrecht zur Belegtransportrichtung verlaufende Lichteintrittsfläche (LE) Teil eines ersten Prismas ist, daß ein den reflektierten Lichtstrahl des ersten Prismas aufnehmendes zweites Prisma mit seiner um 45° geneigten Grenzfläche (G2) als planparalleler Dreieckskörper ausgebildet ist und daß die dritte und vierte Grenzfläche (G3,G4) einem dritten Prisma zugeordnet sind, das den Querschnitt eines Parallelogramms mit 45° Neigungswinkel aufweist.

4. Vorrichtung nach Anspruch 3,
**dadurch gekennzeichnet**, daß der Prismenkörper aus Glas besteht.

5. Vorrichtung nach Anspruch 3,
**dadurch gekennzeichnet**, daß der Prismenkörper aus durchsichtigem Kunststoff besteht.

6. Vorrichtung nach Anspruch 5,
**dadurch gekennzeichnet**, daß die im Strahlengang zwischen Beleuchtungseinrichtung und Bildwandler vorgesehene Abbildungsoptik wenigstens zum Teil im Prismenkörper integriert ist.

7. Vorrichtung nach einem der vorhergehenden Ansprüche,
**dadurch gekennzeichnet**, daß der Bildwandler über der Belegoberkante symmetrisch zwischen den beiden Lichtumlenkeinheiten angeordnet ist.

8. Vorrichtung nach einem der Ansprüche 1 bis 6,
**dadurch gekennzeichnet**, daß das an den Lichtumlenkeinheiten austretende Licht über Umlenkspiegel an einem neben der Belegtransportbahn angeordneten Bildwandler (BW) umgelenkt wird.

## Claims

1. Apparatus for the two-sided optical scanning of documents, using at least one illumination device, two light deflection units which are spatially assigned respectively to the front side and rear side of the document, as well as an optoelectrical image converter for the simultaneous column-by-column scanning of the front side of the document and the rear side of the document, the two light deflection units (1, 2) being arranged symmetrically with respect to one another, with reference to an axis running in the plane of the document perpendicularly to the document conveying direction, and each having a first interface (G1),
characterized in that the first interface deflects the light beam, which is respectively reflected from a front and rear document column (SPV, SPR), parallel to the document plane in the document conveying direction to a second interface (G2), which is inclined at an angle of 45° with respect to the first interface, and in that the light beam reflected at the second interface (G2) in the direction of the upper edge of the document is deflected by means of a third interface (G3) and fourth interface (G4) in such a way that the light beams respectively reflected at the fourth interface (G4) impinge on the image converter as an image respectively of the front and rear document columns (SPV', SPR') in alignment with one another in a line parallel to the document plane.

2. Apparatus according to Claim 1,
characterized in that the light deflection unit (1, 2) comprises a plurality of reflecting surfaces which are fixed in their position relative to one another.

3. Apparatus according to Claim 1,
characterized in that the light deflection unit (1, 2) comprises a single prism body whose light entry face (LE), which runs perpendicularly to the document conveying direction, is part of a first prism, in that a second prism, which receives the reflected light beam from the first prism, is designed as a plane-parallel triangular body with its interface (G2) inclined through 45°, and in that the third and fourth interfaces (G3, G4) are assigned to a third prism, which has the cross-section of a parallelogram with an angle of inclination of 45°.

4. Apparatus according to Claim 3,
characterized in that the prism body is composed of glass.

5. Apparatus according to Claim 3,
characterized in that the prism body is composed of transparent plastic.

6. Apparatus according to Claim 5,
characterized in that the optical imaging arrangement provided in the beam path between illumination device and image converter is at least partly integrated in the prism body.

7. Apparatus according to one of the preceding claims,
characterized in that the image converter is arranged above the upper edge of the document symmetrically between the two light deflection units.

8. Apparatus according to one of Claims 1 to 6,
characterized in that the light emerging from the light deflection units is deflected via deflection mirrors to an image converter (BW) arranged next to the document conveying path.

## Revendications

1. Dispositif de balayage optique des deux faces de documents en utilisant au moins un dispositif d'éclairage, deux unités de déviation de lumière associées dans l'espace respectivement à la face avant et à la face arrière du document, ainsi qu'un convertisseur d'image opto-électrique pour le balayage simultané par colonne de la face avant et de la face arrière du document, les deux unités de déviation d'image (1, 2) étant disposées symétriquement par rapport à un axe s'étendant dans le plan du document, perpendiculairement à la direction de transport des documents et comportant chacune une première surface extérieure (G1),
caractérisé en ce que la première surface extérieure dévie le rayon lumineux réfléchi par une colonne de document avant et une colonne de document arrière (SPV, SPR) parallèlement au plan de document, dans la direction de transport des documents, sur une deuxième surface extérieure (G2) inclinée de 45° par rapport à la première surface extérieure et que le rayon lumineux réfléchi sur la deuxième surface extérieure (G2) en direction du bord supérieur du document est dévié au moyen d'une troisième surface extérieure (G3) et d'une quatrième surface extérieure (G4) de telle sorte que les rayons lumineux réfléchis respectivement sur la troisième surface extérieure (G3) et sur la quatrième surface extérieure (G4), en tant qu'image des colonnes de document avant et arrière (SPV', SPR'), rencontrent le convertisseur d'image en étant alignés entre eux formant ainsi une ligne parallèle au plan de document.

2. Dispositif selon la revendication 1,
caractérisé en ce que l'unité de déviation de lumière (1, 2) est formée de plusieurs surfaces réfléchissantes fixées dans leurs positions les unes par rapport aux autres.

3. Dispositif selon la revendication 1,
caractérisé en ce que l'unité de déviation de lumière (1, 2) est formée d'un corps prismatique unique dont la surface d'entrée de lumière (LE) perpendiculaire à la direction de transport des documents fait partie d'un premier prisme, qu'un deuxième prisme recevant le rayon lumineux réfléchi du premier prisme est réalisé avec sa surface extérieure (G2) inclinée de 45° sous forme de corps triangulaire à faces planes et parallèles et que la troisième et la quatrième surfaces extérieures (G3, G4) sont associées à un troisième prisme qui a la section transversale d'un parallélogramme avec un angle d'inclinaison de 45°.

4. Dispositif selon la revendication 3,
caractérisé en ce que le corps prismatique est en verre.

5. Dispositif selon la revendication 3,
caractérisé en ce que le corps prismatique est en une matière plastique transparente.

6. Dispositif selon la revendication 5,
caractérisé en ce que l'optique de reproduction prévue dans le trajet du rayon entre le dispositif d'éclairage et le convertisseur d'image, est intégrée au moins en partie dans le corps prismatique.

7. Dispositif selon l'une des revendications précédentes,
caractérisé en ce que le convertisseur d'image est disposé au-dessus du bord supérieur du document, de manière symétrique entre les deux unités de déviation de lumière.

8. Dispositif selon l'une des revendications 1 à 6,
caractérisé en ce que la lumière sortant des unités de déviation de lumière est déviée par des miroirs de déviation sur un convertisseur d'image (BW) disposé à côté de la trajectoire de transport des documents.
